(19) Europäisches Patentamt
European Patent Office
Office européen des brevets

(11) Veröffentlichungsnummer : **0 423 071 B1**

(12) # EUROPÄISCHE PATENTSCHRIFT

(45) Veröffentlichungstag der Patentschrift : **08.06.94 Patentblatt 94/23**

(51) Int. Cl.$^5$ : **C09B 45/24,** D06P 1/10

(21) Anmeldenummer : **90810763.4**

(22) Anmeldetag : **04.10.90**

(54) **Polyazofarbstoffe.**

(30) Priorität : **12.10.89 CH 3720/89**

(43) Veröffentlichungstag der Anmeldung : **17.04.91 Patentblatt 91/16**

(45) Bekanntmachung des Hinweises auf die Patenterteilung : **08.06.94 Patentblatt 94/23**

(84) Benannte Vertragsstaaten : **BE CH DE ES FR GB LI**

(56) Entgegenhaltungen :
**EP-A- 0 034 724**
**EP-A- 0 078 007**
**GB-A- 465 138**
**US-A- 2 152 652**

(73) Patentinhaber : **CIBA-GEIGY AG**
**Klybeckstrasse 141**
**CH-4002 Basel (CH)**

(72) Erfinder : **Schlesinger, Ulrich, Dr.**
**Im Untern Wörth 39**
**W-7852 Binzen (DE)**

EP 0 423 071 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Polyazofarbstoffe

Die vorliegende Erfindung betrifft neue metallhaltige Polyazofarbstoffe, Verfahren zu deren Herstellung sowie deren Verwendung zum Färben von verschiedensten textilen und nicht textilen Materialien, vor allem von Leder.

Gegenstand der Erfindung sind somit Metallkomplexe von Verbindungen der Formel

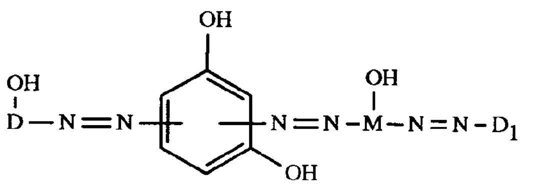

(1),

worin

D ein unsubstituierter oder durch $C_1$-$C_4$-Alkyl, $C_1$-$C_4$-Alkoxy, Halogen, Trifluormethyl, $C_1$-$C_4$-Alkylsulfonyl, Sulfamoyl, N-Mono- oder N,N-Di-$C_1$-$C_4$-Alkylsulfamoyl, Carbamoyl, N-Mono- oder N,N-Di-$C_1$-$C_4$-Alkylcarbamoyl, Sulfo, Nitro, Cyano, Carboxy, Phenoxy, $C_1$-$C_4$-Alkanoylamino und/oder $C_1$-$C_4$-Alkoxycarbonyl substituierter Rest eines 1- oder 2-Naphthylamins oder Aminobenzols ist, der in ortho-Stellung zur Aminogruppe eine Hydroxygruppe aufweist,

$D_1$ ein unsubstituierter oder durch $C_1$-$C_4$-Alkyl, $C_1$-$C_4$-Alkoxy, Halogen, Trifluormethyl, $C_1$-$C_4$-Alkylsulfonyl, Sulfamoyl, N-Mono- oder N,N-Di-$C_1$-$C_4$-Alkylsulfamoyl, Carbamoyl, N-Mono- oder N,N-Di-$C_1$-$C_4$-Alkylcarbamoyl, Sulfo, Nitro, Cyano, Carboxy, Phenoxy, $C_1$-$C_4$-Alkanoylamino und/oder $C_1$-$C_4$-Alkoxycarbonyl substituierter Rest eines 1- oder 2-Naphthylamins oder Aminobenzols und

M ein gegebenenfalls weitersubstituierter Phenylenrest ist.

In der EP-A-0 078 007 sind zwar bereits Metallkomplexe von Trisazofarbstoffen bekannt. Die nächstliegenden Verbindungen dieser Patentanmeldung unterscheiden sich von den Metallkomplexen der vorliegenden Erfindung durch die fehlende OH-Gruppe an M und die Substituenten an $D_1$.

Bei den metallhaltigen Polyazofarbstoffen der vorliegenden Erfindung leitet sich der Diazorest D von einem 1- oder 2-Naphthylamin oder Aminobenzol ab, wobei die genannten aromatischen Amine jeweils in ortho-Stellung zur Aminogruppe eine Hydroxygruppe aufweisen und darüberhinaus durch einen oder mehrere gleiche oder verschiedene Reste weitersubstituiert sein können.

Geeignete Substituenten am Phenyl- oder Naphthylrest D sind $C_1$-$C_4$-Alkyl, welches hier und im weiteren generell Methyl, Ethyl, n- oder iso-Propyl oder n-, iso-, sec.- oder tert.-Butyl umfasst; $C_1$-$C_4$-Alkoxy, worunter generell Methoxy, Ethoxy, n- oder iso-Propoxy oder n-, iso-, sec.- oder tert.-Butoxy zu verstehen ist; Halogen, z.B. Fluor, Brom und insbesondere Chlor; Trifluormethyl; $C_1$-$C_4$-Alkylsulfonyl, besonders Methyl- oder Ethylsulfonyl; Sulfamoyl; N-Mono- oder N,N-Di-$C_1$-$C_4$-Alkylsulfamoyl; Carbamoyl; N-Mono- oder N,N-Di-$C_1$-$C_4$-Alkylcarbamoyl, Sulfo; Nitro; Cyano; Carboxy; Phenoxy; $C_1$-$C_4$-Alkanoylamino, besonders Acetylamino, Propionylamino; Benzoylamino; $C_1$-$C_4$-Alkoxycarbonyl, z.B. Methoxy- oder Ethoxycarbonyl.

Handelt es sich bei D-OH um den Rest eines o-Aminophenols, so ist dieses vorzugsweise unsubstituiert oder z.B. durch Chlor, Nitro, Sulfo, Methyl, Methoxy, Methylsulfonyl, Carbamoyl und/oder Sulfamoyl weitersubstituiert.

D-OH steht jedoch bevorzugt für den Rest eines unsubstituierten oder z.B. durch Sulfo, Nitro und/oder Chlor substituierten Aminonaphthols. Beispiele sind 1-Amino-2-hydroxynaphthalin-4-sulfonsäure, 1-Amino-2-hydroxy-6-nitronaphthalin-4-sulfonsäure, 1-Amino-2-hydroxy-6-chlornaphthalin-4-sulfonsäure, 1-Amino-2-hydroxynaphthalin-4,6-disulfonsäure.

Eine besonders bevorzugte Ausführungsform der vorliegenden Erfindung betrifft Metallkomplexe von Verbindungen der Formel (1), worin D-OH den Rest von 1-Amino-2-hydroxy-6-nitronaphthalin-4-sulfonsäure bedeutet.

Bei $D_1$ handelt es sich z.B. um den Rest eines Aminobenzols oder Aminonaphthalins, welcher jeweils unsubstituiert oder z.B. wie zuvor für den Rest D geschildert weitersubstituiert ist.

$D_1$ steht vorzugsweise für den Rest eines Aminobenzols oder 1- oder 2-Naphthylamins, welcher jeweils unsubstituiert oder z.B. durch Sulfo, Nitro, Chlor, Methyl, Methoxy, Methylsulfonyl, Carbamoyl und/oder Sulfamoyl weitersubstituiert ist.

Besonders bevorzugt ist für $D_1$ die Bedeutung des Restes eines unsubstituierten oder durch Sulfo substituierten Aminobenzols oder 1- oder 2-Naphthylamins.

Eine insbesondere bevorzugte Ausführungsform der vorliegenden Erfindung betrifft Metallkomplexe von Verbindungen der Formel (1), worin $D_1$ der Rest von Anilin-2-, -3- oder -4-sulfonsäure ist.

Der Phenylenrest M kann gegebenenfalls durch die zuvor für D angegebenen Reste weitersubstituiert sein.

Der Rest -M(OH)- entspricht vorzugsweise der Formel

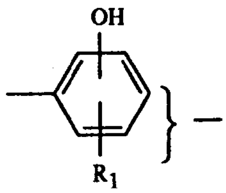

(2),

worin $R_1$ z.B. Wasserstoff, $C_1$-$C_4$-Alkyl, $C_1$-$C_4$-Alkoxy, Halogen, Nitro oder Sulfo bedeutet.

-M(OH)- steht besonders bevorzugt für einen Rest der Formel

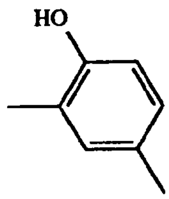

(2a),

worin sich die Hydroxygruppe in o-Stellung zu der Azogruppe befindet, die M mit Resorcin verbindet.

Als Metallkomplexe der Verbindungen der Formel (1) kommen z.B. Kobalt-, Nickel-, Chrom-, Kupfer- oder Eisenkomplexe in Betracht; je nach der Koordinationszahl des Metallatoms und den bei der Metallisierung herrschenden Bedingungen handelt es sich dabei um 1:1- oder 1:2-Metallkomplexe. Bevorzugt sind Kupfer-, Chrom-, Kobalt- und insbesondere Eisenkomplexe von Verbindungen der Formel (1).

Eine bevorzugte Ausführungsform der vorliegenden Erfindung betrifft Kobalt-, Nickel-, Chrom-, Kupfer oder Eisenkomplexe von Verbindungen der Formel

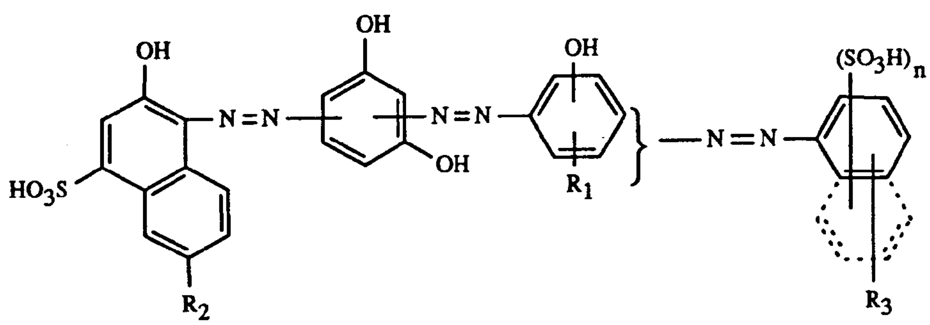

(1a),

worin $R_1$ die zuvor angegebene Bedeutung hat, $R_2$ Wasserstoff, Nitro, Sulfo oder Chlor ist, $R_3$ Wasserstoff, Nitro, Chlor, Methyl, Methoxy, Methylsulfonyl, Carbamoyl oder Sulfamoyl bedeutet und n für die Zahl 0 oder 1 steht.

Eine besonders bevorzugte Ausführungsform der vorliegenden Erfindung betrifft Kobalt-, Chrom-, Kupfer- und insbesondere Eisenkomplexe von Verbindungen der Formel

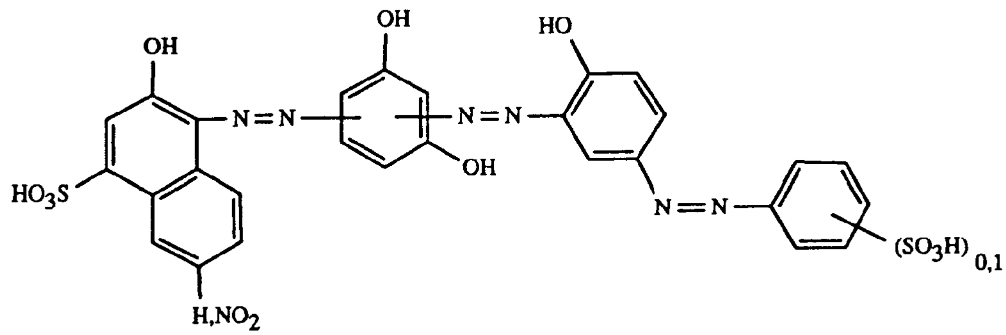

(1b)

Die Metallkomplexe der Verbindungen der Formel (1) können in an sich bekannter Weise hergestellt werden, z.B. indem man

a) eine Verbindung der Formel

$$D_1\text{-}NH_2 \qquad (3),$$

worin $D_1$ die zuvor angegebene Bedeutung hat, diazotiert und auf eine Verbindung der Formel

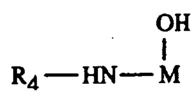

(4),

worin M die zuvor angegebene Bedeutung hat und $R_4$ $C_2$-$C_4$-Alkanoyl, z.B. Propionyl, Butyryl und insbesondere Acetyl, oder Benzoyl bedeutet, kuppelt,

b) die resultierende Monoazoverbindung der Formel

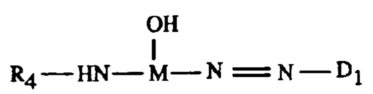

(5)

durch Verseifung in die entsprechende Aminoazoverbindung umwandelt, diese anschliessend diazotiert und auf 1,3-Dihydroxybenzol (Resorcin) kuppelt,

c) eine Verbindung der Formel

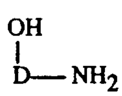

(6)

diazotiert und auf das gemäss b) erhaltene Produkt kuppelt und

d) das gemäss c) erhaltene Trisazo-Produkt mit einem metallabgebenden Mittel metallisiert.

In den Verbindungen der Formeln (5) und (6) haben D, $D_1$, M und $R_4$ jeweils die zuvor angegebene Bedeutung.

Die Verbindungen der Formeln (3), (4) und (6) sind bekannt oder können in an sich bekannter Weise erhalten werden.

Die Diazotierung der Verbindungen der Formeln (3) und (6) sowie der verseiften Verbindung der Formel (5) erfolgt jeweils in an sich bekannter Weise, z.B. mit einem Nitrit, z.B. mit einem Alkalimetallnitrit wie Natriumnitrit, in einem mineralsauren Medium, z.B. in einem salzsauren Medium, bei Temperaturen von -5 bis 30°C und vorzugsweise 0 bis 10°C.

Die Kupplungsreaktionen gemäss a), b) und c) werden ebenfalls unter üblichen, an sich bekannten Bedingungen durchgeführt. Man arbeitet zweckmässig bei einem leicht sauren, neutralen oder alkalischen pH-Wert und Temperaturen von ca. -5 bis 30°C, vorzugsweise 0 bis 15°C, in einem wässrigen oder wässrig-organischen Medium. Bevorzugt ist für die Kupplungsreaktionen jeweils ein neutrales oder alkalisches Medium und insbesondere ein leicht alkalisches Medium, d.h. ein Medium, das einen pH-Wert von z.B. 7,5 bis 12 und insbesondere 8 bis 10 aufweist; der pH-Wert kann durch Zugabe von Basen, z.B. Alkalimetallhydroxiden, -carbonaten oder -acetaten wie Lithium-, Natrium- oder Kaliumhydroxid oder -carbonat, Natriumacetat usw., Ammoniak oder organischen Aminen eingestellt und stabilisiert werden. Auch die Verseifung der Acylaminoverbindungen der Formel (5) zu den entsprechenden Aminoverbindugen gemäss Verfahrensschritt b) erfolgt

in an sich bekannter Weise, zweckmässig durch Erhitzen in einem wässrig-alkalischen Medium, z.B. indem man die gemäss a) erhaltene rohe Lösung der Verbindung der Formel (5) mit einer der zuvor genannten Basen, z.B. mit Natrium- oder Kaliumhydroxid, versetzt und am Rückfluss erhitzt.

Die Verbindungen der Formeln (3), (4) und (6) werden im allgemeinen in äquimolaren Mengen oder in einem gewissen Ueberschuss, der bis zu 100 % betragen kann, bezogen auf 1,3-Dihydroxybenzol, eingesetzt.

Die nicht-metallisierten Verbindungen der Formel (1) sind neu und stellen einen weiteren Gegenstand der Erfindung dar.

Die Metallisierung der Verbindungen der Formel (1) erfolgt in an sich bekannter Weise, z.B. in wässrigem Milieu bei Temperaturen von 10 bis 100°C, vorzugsweise 20-50°C unter Normaldruck bei einem pH-Wert von z.B. 3 bis 12, vorzugsweise 3 bis 9.

Als metallabgebende Mittel kommen z.B. Eisen-(II)- oder Eisen-(III)-chlorid, -sulfat oder -nitrat; Kobaltacetat, -sulfat oder -chlorid; Nickelacetat, -formiat, -sulfat oder -chlorid; Chromfluorid, -sulfat, -acetat, -formiat oder -salicylat; oder Kupfercarbonat, -chlorid, -sulfat oder -acetat in Frage.

Bevorzugt ist die Verwendung von Eisen-abgebenden Mitteln als Metallisierungsmittel und hierbei insbesondere die Verwendung von Eisen(III)-sulfat.

Die nach dem obigen Verfahren erhältlichen neuen Metallkomplexe von Verbindungen der Formel (1) werden vorteilhaft in Form ihrer Salze, insbesondere Alkali-, wie Lithium-, Kalium- oder Natriumsalze, oder Ammoniumsalze oder Salze von organischen Aminen mit positiv geladenem Stickstoffatom, z.B. Alkanolammoniumsalze, isoliert.

Die Verbindungen der Formel (1) sowie deren Metallkomplexe stellen anionische Farbstoffe dar, und sind allgemein für das Färben von mit anionischen Farbstoffen anfärbbaren textilen und nicht textilen Substraten geeignet, z.B. für das Färben von Fasermaterial aus natürlicher oder regenerierter Cellulose, natürlichen oder synthetischen Polyamiden, Polyurethanen oder basisch modifizierten Polyolefinen, ferner von anodisiertem Aluminium oder von Leder und Pelzen.

Die erfindungsgemässen Farbstoffe können vorteilhaft z.B. zum Färben von Cellulosevliesstoffen, Holz und Papier eingesetzt werden. Als Fasermaterialien kommen insbesondere Baumwolle und natürliche Polyamide wie Wolle und Seide in Betracht, während bei den synthetischen Fasermaterialien Nylon und basisch modifiziertes Polypropylen im Vordergrund stehen.

Die erfindungsgemässen Metallkomplexe der Formel (1) eignen sich bevorzugt zum Färben von Pelzen und insbesondere von Leder, wobei alle Ledersorten, z.B. Chromleder, nachgegerbtes Leder oder Velourleder von Ziege, Schaf, Rind und Schwein, geeignet sind.

Man erhält Färbungen mit guten Allgemein-Echtheiten, wie Diffusions-, Licht- Säure- und Alkaliechtheit. Die erfindungsgemässen Farbstoffe weisen ein gutes Ziehvermögen, eine gute Säure- und Alkalistabilität, eine gute Elektrolytbeständigkeit sowie ein gutes Aufbauvermögen auf diversen Ledersorten wie Reinchromleder und nachgegerbtem Leder auf.

Die erfindungsgemässen Verbindungen der Formel (1) sowie deren Metallkomplexe sind ausserdem geeignet als Bestandteile von Tinten und insbesondere von Aufzeichnungsflüssigkeiten für das Ink-Jet-Verfahren.

Die nachfolgenden Beispiele dienen der Erläuterung der Erfindung, ohne sie darauf zu beschränken. Teile bedeuten Gewichtsteile und Prozente Gewichtsprozente.

<u>Beispiel 1:</u> 17,3 Teile Anilin-3-sulfonsäure werden mit Natriumnitrit und Salzsäure in üblicher Weise diazotiert und die Diazolösung bei 0 bis 5°C zu einer Suspension von 15,1 Teilen 2-Acetylaminophenol in 25 Teilen Wasser und 40 Teilen Eis getropft; dabei wird der Kupplungs-pH-Wert durch Zugabe von Natriumhydroxidlösung bei 9 gehalten. Man lässt 1 Stunde bei 0 bis 5°C nachrühren, gibt dann 25 Teile 30%ige Natriumhydroxidlösung hinzu und erhitzt das Reaktionsgemisch ca. 1,5 Stunden unter Rückfluss. Danach wird Kochsalz zugesetzt, der pH-Wert mit Salzsäure auf ca. 3,5 erniedrigt und die ausgesalzene Aminoazoverbindung abfiltriert.

Die erhaltene Aminoazoverbindung wird in 170 Teilen Wasser und 17 Teilen 30%ige Natriumhydroxidlösung gelöst, mit 21,7 Teilen 4 N Natriumnitritlösung versetzt, und das Ganze zu einem Gemisch bestehend aus 43 Teilen konz. Salzsäure und 56 Teilen Eis getropft. Man lässt 1 Stunde bei 0 bis 5°C nachrühren und gibt die erhaltene Diazolösung tropfenweise innerhalb von ca. 30 Minuten bei 0 bis 5°C zu einer Lösung bestehend aus 9,6 Teilen Resorcin, 93 Teilen Wasser, 18 Teilen calc. Soda und 50 Teilen Eis; der pH-Wert bei dieser zweiten Kupplung wird durch Zugabe von Natriumhydroxidlösung bei 9 gehalten. Man lässt 2,5 Stunden nachrühren, stellt den pH-Wert der erhaltenen Lösung der Disazoverbindung auf 9,5 ein und gibt die wässrige Lösung der Diazoverbindung von 38,4 Teilen 1-Amino-2-hydroxy-6-nitronaphthalin-4-sulfonsäure innerhalb von ca. 45 Minuten bei 0 bis 5°C hinzu. Der pH-Wert bei dieser dritten Kupplung wird durch Zugabe von Natriumhydroxidlösung bei 9,5 gehalten. Es folgt ein ca. 8stündiges Nachrühren bei 0 bis 5°C und pH 9,5. Danach wird der pH-Wert mit Salzsäure neutral gestellt, 34,8 Teile Eisen(III)-sulfat zugegeben, der pH-Wert

mit Natriumacetat auf ca. 4,5 eingestellt und das Reaktionsgemisch 2 Stunden unter Rückfluss erhitzt. Am Ende wird der entstandene Eisenkomplexfarbstoff der mutmasslichen Formel

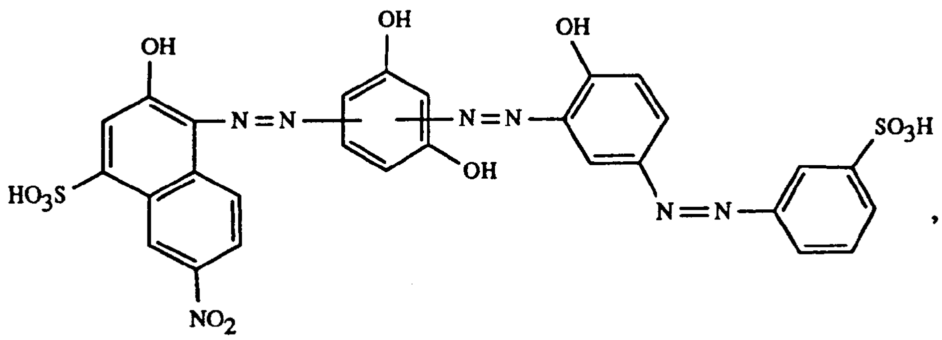

,

Fe-Komplex ausgesalzen, abfiltriert und getrocknet; er färbt Leder in einem neutralen braunen Farbton mit guten Allgemeinechtheiten.

Beispiel 2:

Verfährt man wie im Beispiel 1 beschrieben, versetzt jedoch die Lösung des Trisazofarbstoffes mit 209 Teilen einer 3%igen Chromsalicylsäurelösung und erhitzt 2 Stunden unter Rückfluss, so erhält man nach dem Aussalzen, Abfiltrieren und Trocknen den entsprechenden Chromkomplexfarbstoff, der Leder in einem schwarzen Farbton mit guten Allgemeinechtheiten färbt.

Beispiele 3-13:

Analog wie in den Beispielen 1 und 2 beschrieben lassen sich die folgenden Metallkomplexfarbstoffe herstellen, die Leder in den angegebenen Farbtönen färben.

| Beispiel | Farbstoff | Farbton |
|---|---|---|
| 3 | 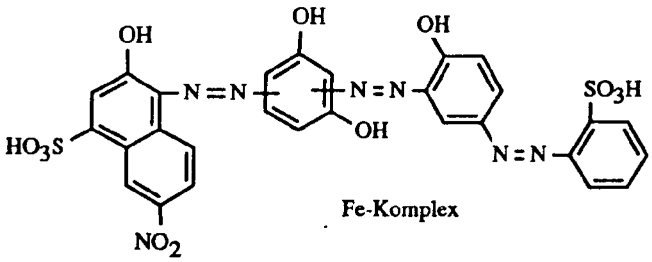 Fe-Komplex | braun |
| 4 | 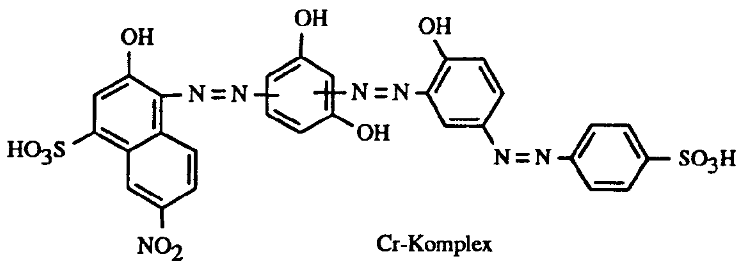 Cr-Komplex | grau-schwarz |
| 5 | 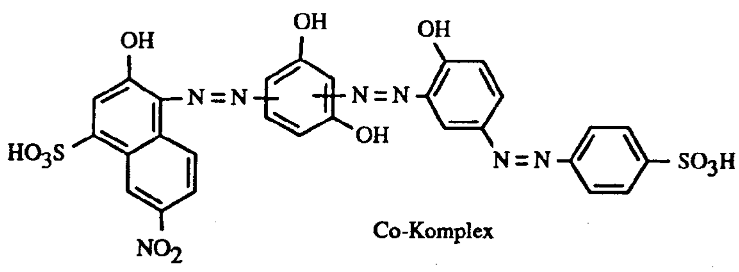 Co-Komplex | grau |
| 6 | 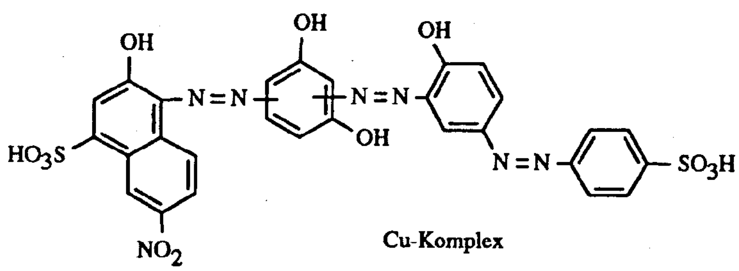 Cu-Komplex | schwarz-violett |

| Beispiel | Farbstoff | Farbton |
|---|---|---|
| 7 | 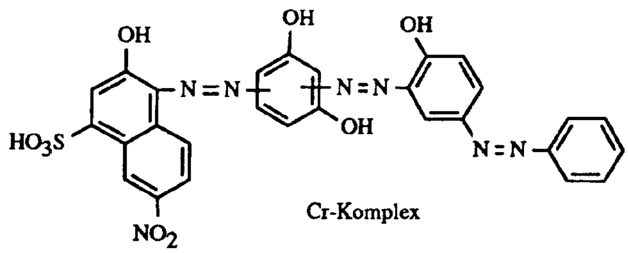 Cr-Komplex | schwarz |
| 8 | 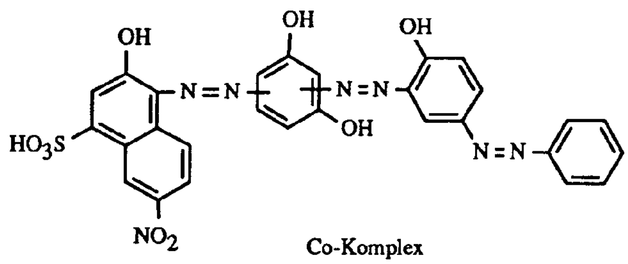 Co-Komplex | dunkel-braun |
| 9 | 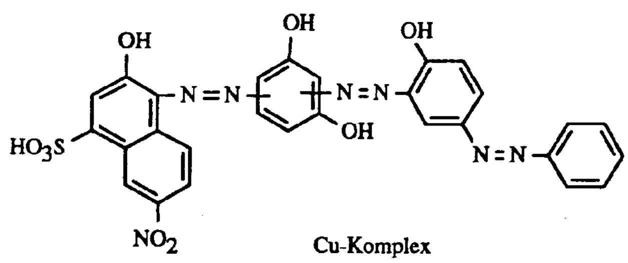 Cu-Komplex | bordeaux |
| 10 | 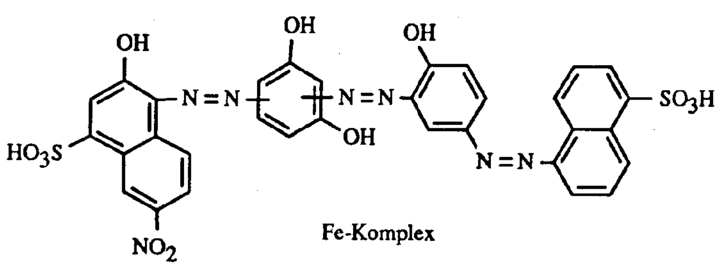 Fe-Komplex | braun |

| Beispiel | Farbstoff | Farbton |
|---|---|---|
| 11 | 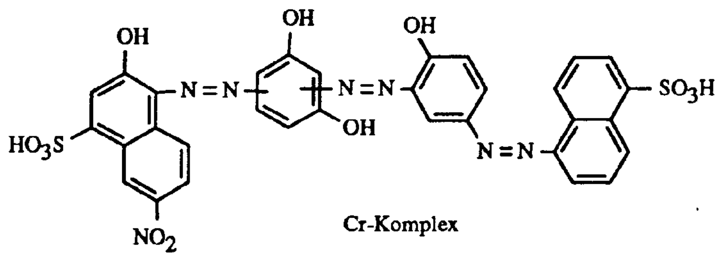 Cr-Komplex | grau-schwarz |
| 12 | 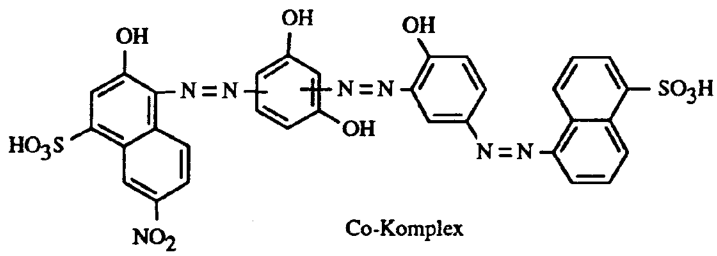 Co-Komplex | olive-schwarz |
| 13 | 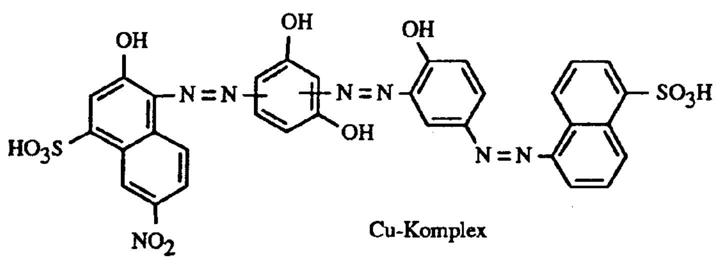 Cu-Komplex | schwarz-violett |
| 14 | 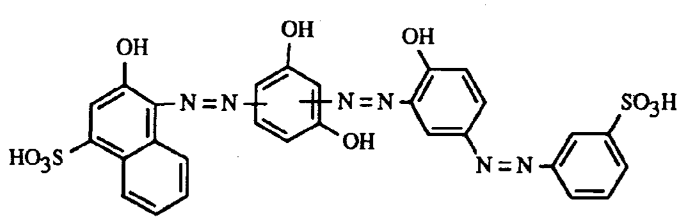 Fe-Komplex | braun |

| Beispiel | Farbstoff | Farbton |
|---|---|---|
| 15 | 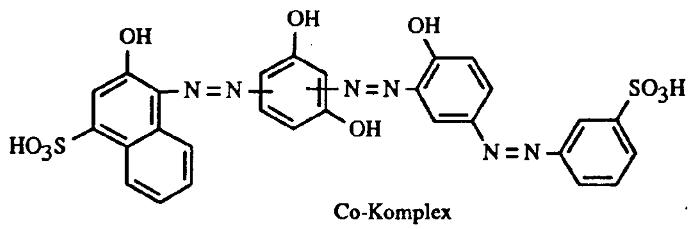 Co-Komplex | rotbraun |
| 16 | 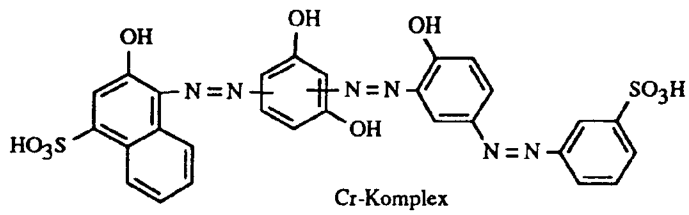 Cr-Komplex | blau-schwarz |
| 17 | 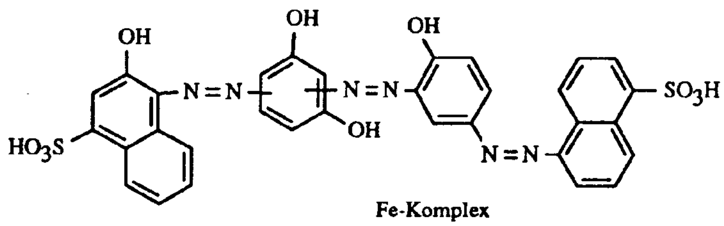 Fe-Komplex | braun |
| 18 | 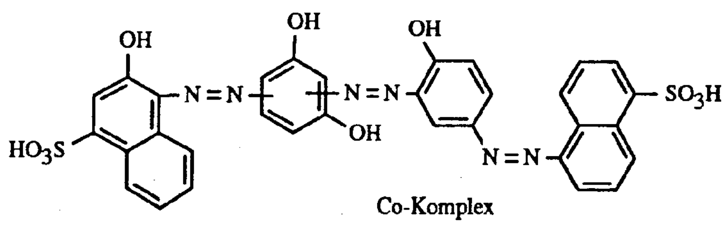 Co-Komplex | rotbraun |
| 19 | 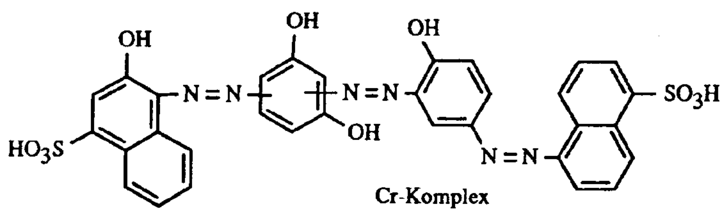 Cr-Komplex | blau-schwarz |

## Färbevorschrift für Leder

100 Teile Bekleidungsveloursleder werden bei 50°C in einer Lösung von 1000 Teilen Wasser und 2 Teilen 24%igem Ammoniak während 2 Stunden aufgewalkt und an schliessend bei 60°C in einer Lösung von 1000 Teilen Wasser, 2 Teilen 24%igem Ammoniak und 3 Teilen Farbstoff gemäss dem Beispiel 1 während 1 Stunde gefärbt. Hierauf gibt man eine Lösung von 40 Teilen Wasser und 4 Teilen 85%iger Ameisensäure zu und färbt noch weitere 30 Minuten. Dann werden die Leder gut gespült und gegebenenfalls noch mit 2 Teilen eines Dicyandiamid-Formaldehydkondensationsproduktes während 30 Minuten bei 50°C behandelt. Man erhält eine braune Färbung mit guten Echtheiten.

## Patentansprüche

1. Metallkomplexe von Verbindungen der Formel

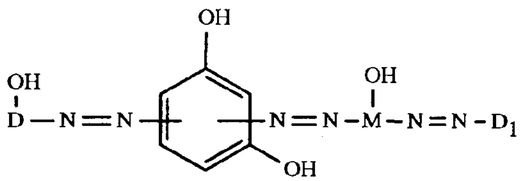

(1),

worin

D ein unsubstituierter oder durch $C_1$-$C_4$-Alkyl, $C_1$-$C_4$-Alkoxy, Halogen, Trifluormethyl, $C_1$-$C_4$-Alkylsulfonyl, Sulfamoyl, N-Mono- oder N,N-Di-$C_1$-$C_4$-Alkylsulfamoyl, Carbamoyl, N-Mono- oder N,N-Di-$C_1$-$C_4$-Alkylcarbamoyl, Sulfo, Nitro, Cyano, Carboxy, Phenoxy, $C_1$-$C_4$-Alkanoylamino und/oder $C_1$-$C_4$-Alkoxycarbonyl substituierter Rest eines 1- oder 2-Naphthylamins oder Aminobenzols ist, der in ortho-Stellung zur Aminogruppe eine Hydroxygruppe aufweist,

$D_1$ ein unsubstituierter oder durch $C_1$-$C_4$-Alkyl, $C_1$-$C_4$-Alkoxy, Halogen, Trifluormethyl, $C_1$-$C_4$-Alkylsulfonyl, Sulfamoyl, N-Mono- oder N,N-Di-$C_1$-$C_4$-Alkylsulfamoyl, Carbamoyl, N-Mono- oder N,N-Di-$C_1$-$C_4$-Alkylcarbamoyl, Sulfo, Nitro, Cyano, Carboxy, Phenoxy, $C_1$-$C_4$-Alkanoylamino und/oder $C_1$-$C_4$-Alkoxycarbonyl substituierter Rest eines 1- oder 2-Naphthylamins oder Aminobenzols und

M ein gegebenenfalls weitersubstituierter Phenylenrest ist.

2. Metallkomplexe gemäss Anspruch 1, dadurch gekennzeichnet, dass D-OH den Rest eines unsubstituierten oder durch Chlor, Nitro, Sulfo, Methyl, Methoxy, Methylsulfonyl, Carbamoyl und/oder Sulfamoyl substituierten o-Aminophenols bedeutet.

3. Metallkomplexe gemäss Anspruch 1, dadurch gekennzeichnet, dass D-OH den Rest eines unsubstituierten oder durch Sulfo, Nitro und/oder Chlor substituierten o-Aminonaphthols bedeutet.

4. Metallkomplexe gemäss einem der Ansprüche 1 bis 3, dadurch gekennzeichnet, dass $D_1$ ein unsubstituierter oder durch Sulfo, Nitro, Chlor, Methyl, Methoxy, Methylsulfonyl, Carbamoyl und/oder Sulfamoyl substituierter Rest eines Aminobenzols oder 1- oder 2-Naphthylamins ist.

5. Metallkomplexe gemäss einem der Ansprüche 1 bis 4, dadurch gekennzeichnet, dass $D_1$ der Rest von Anilin-2-, -3- oder -4-sulfonsäure ist.

6. Metallkomplexe gemäss einem der Ansprüche 1 bis 5, dadurch gekennzeichnet, dass der Rest -M(OH)- der Formel

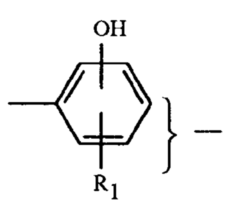

(2),

entspricht, worin $R_1$ Wasserstoff, $C_1$-$C_4$-Alkyl, $C_1$-$C_4$-Alkoxy, Halogen, Nitro oder Sulfo bedeutet.

7. Metallkomplexe gemäss einem der Ansprüche 1 bis 6, dadurch gekennzeichnet, dass der Rest -M(OH)- der Formel

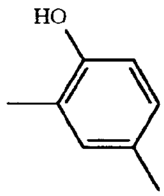

(2a),

entspricht, worin sich die Hydroxygruppe in o-Stellung zu der Azogruppe befindet, die M mit Resorcin verbindet.

8. Kobalt-, Nickel-, Chrom-, Kupfer- und Eisenkomplexe gemäss Anspruch 1.

9. Eisenkomplexe gemäss Anspruch 1.

10. Kobalt-, Nickel-, Chrom-, Kupfer- und Eisenkomplexe von Verbindungen der Formel

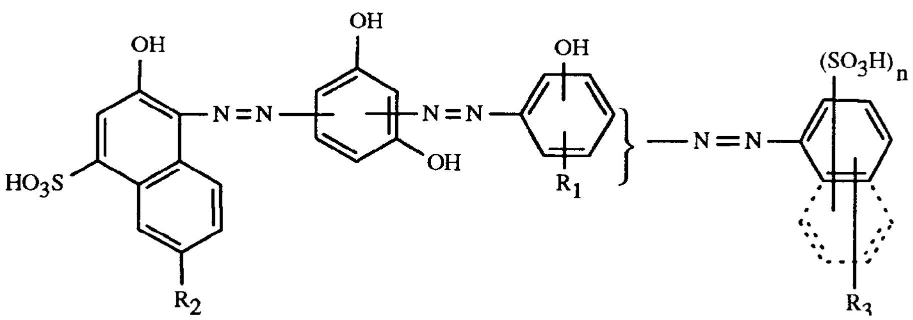

(1a),

worin $R_1$ die im Anspruch 6 angegebene Bedeutung hat, $R_2$ Wasserstoff, Nitro, Sulfo oder Chlor ist, $R_3$ Wasserstoff, Nitro, Chlor, Methyl, Methoxy, Methylsulfonyl, Carbamoyl oder Sulfamoyl bedeutet und n für die Zahl 0 oder 1 steht.

11. Eisen-, Kobalt-, Chrom- und Kupferkomplexe von Verbindungen der Formel

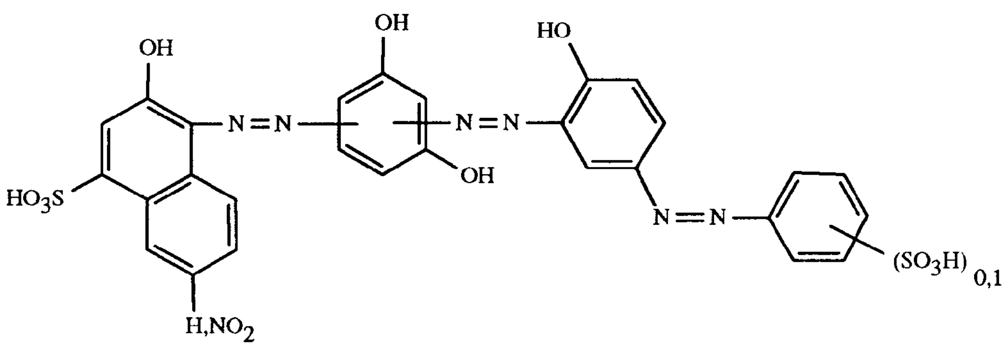

(1b)

12. Verfahren zur Herstellung von Metallkomplexen der Verbindungen der Formel (1) gemäss Anspruch 1, dadurch gekennzeichnet, dass man

a) eine Verbindung der Formel

$$D_1\text{-}NH_2 \qquad (3),$$

diazotiert und auf eine Verbindung der Formel

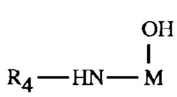

(4)

kuppelt,

b) die resultierende Monoazoverbindung der Formel

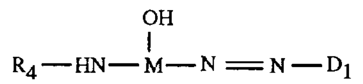

(5)

durch Verseifung in die entsprechende Aminoazoverbindung umwandelt, diese anschliessend diazotiert und auf 1,3-Dihydroxybenzol (Resorcin) kuppelt,

c) eine Verbindung der Formel

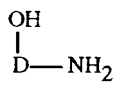

(6)

diazotiert und auf das gemäss b) erhaltene Produkt kuppelt und

d) das gemäss c) erhaltene Trisazo-Produkt mit einem metallabgebenden Mittel metallisiert,

worin D, $D_1$ und M jeweils die im Anspruch 1 angegebene Bedeutung haben und $R_4$ $C_2$-$C_4$-Alkanoyl oder Benzoyl ist.

**13.** Verwendung von Metallkomplexen von Verbindungen der Formel (1) als Farbstoffe zum Färben von Fasermaterialien aus natürlicher oder regenerierter Cellulose, natürlichen oder synthetischen Polyamiden, Polyurethanen oder basisch modifizierten Polyolefinen, von anodisiertem Aluminium oder von Pelzen und Leder.

**14.** Verwendung gemäss Anspruch 13, dadurch gekennzeichnet, dass man Pelze oder Leder färbt.

**15.** Verbindungen der Formel (1) gemäss Anspruch 1.

## Claims

**1.** A metal complex of a compound of the formula

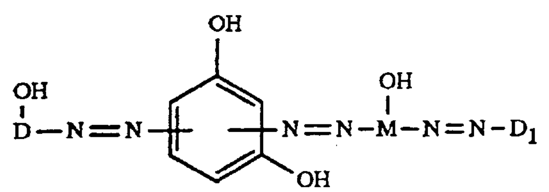

(1),

in which D is the radical of a 1- or 2-naphthylamine or of aminobenzene which is unsubstituted or substituted by $C_1$-$C_4$alkyl, $C_1$-$C_4$alkoxy, halogen, trifluoromethyl, $C_1$-$C_4$alkylsulfonyl, sulfamoyl, N-mono- or N,N-di-$C_1$-$C_4$alkylsulfamoyl, carbamoyl, N-mono- or N,N-di-$C_1$-$C_4$alkylcarbamoyl, sulfo, nitro, cyano, carboxyl, phenoxy, $C_1$-$C_4$alkanoylamino and/or $C_1$-$C_4$alkoxycarbonyl and has a hydroxyl group in the ortho position relative to the amino group, $D_1$ is the radical of a 1- or 2-naphthylamine or of aminobenzene which is unsubstituted or substituted by $C_1$-$C_4$alkyl, $C_1$-$C_4$alkoxy, halogen, trifluoromethyl, $C_1$-$C_4$alkylsulfonyl, sulfamoyl, N-mono- or N,N-di-$C_1$-$C_4$alkylsulfamoyl, carbamoyl, N-mono- or N,N-di-$C_1$-$C_4$alkylcarbamoyl, sulfo, nitro, cyano, carboxyl, phenoxy, $C_1$-$C_4$alkanoylamino and/or $C_1$-$C_4$alkoxycarbonyl, and M is a phenylene radical which may be further substituted.

**2.** A metal complex according to claim 1, wherein D-OH is the radical of an unsubstituted or chlorine-, nitro-, sulfo-, methyl-, methoxy-, methylsulfonyl-, carbamoyl- and/or sulfamoyl-substituted o-aminophenol.

**3.** A metal complex according to claim 1, wherein D-OH is the radical of an unsubstituted or sulfo-, nitro- and/or chlorine-substituted o-aminonaphthol.

**4.** A metal complex according to any one of claims 1 to 3, wherein $D_1$ is a radical of an aminobenzene or of 1- or 2-naphthylamine which is unsubstituted or substituted by sulfo, nitro, chlorine, methyl, methoxy, methylsulfonyl, carbamoyl and/or sulfamoyl.

**5.** A metal complex according to any one of claims 1 to 4, wherein $D_1$ is the radical of aniline-2-, -3- or -4-sulfonic acid.

6. A metal complex according to any one of claims 1 to 5, wherein the radical -M(OH)- has the formula

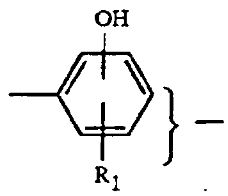

(2),

in which $R_1$ is hydrogen, $C_1$-$C_4$alkyl, $C_1$-$C_4$alkoxy, halogen, nitro or sulfo.

7. A metal complex according to any one of claims 1 to 6, wherein the radical -M(OH)- has the formula

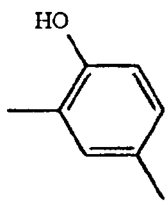

(2a),

in which the hydroxyl group is in the o-position relative to the azo group linking M with resorcinol.

8. A cobalt, nickel, chromium, copper or iron complex according to claim 1.

9. An iron complex according to claim 1.

10. A cobalt, nickel, chromium, copper or iron complex of a compound of the formula

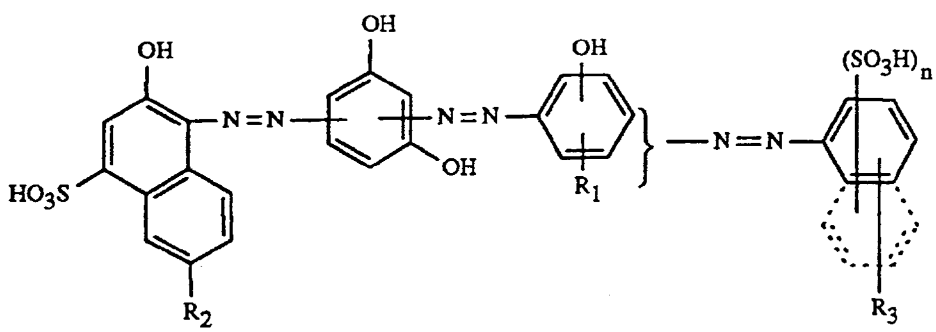

(1a),

in which $R_1$ is as defined in claim 6, $R_2$ is hydrogen, nitro, sulfo or chlorine, $R_3$ is hydrogen, nitro, chlorine, methyl, methoxy, methylsulfonyl, carbamoyl or sulfamoyl and n is the number 0 or 1.

11. An iron, cobalt, chromium or copper complex of a compound of the formula

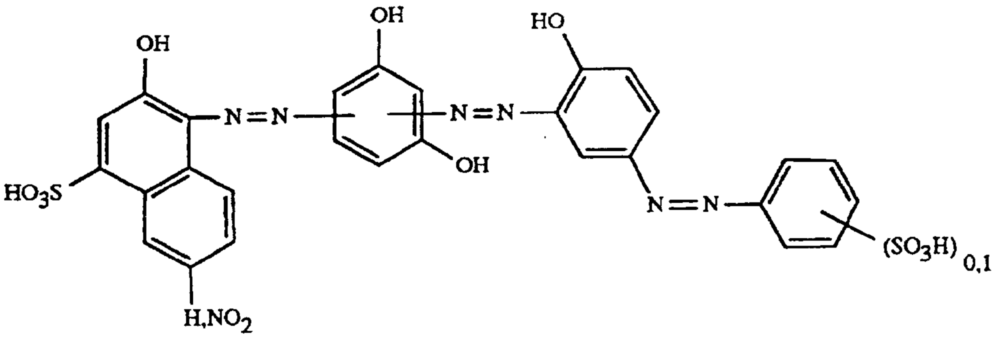

(1b)

**12.** A process for the preparation of a metal complex of a compound of the formula (1) according to claim 1, which comprises

a) diazotizing a compound of the formula

$D_1$-$NH_2$ (3),

and coupling the product onto a compound of the formula

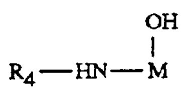

(4)

b) converting the resulting monoazo compound of the formula

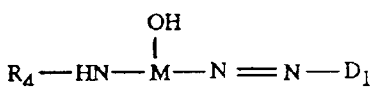

(5)

by hydrolysis into the corresponding aminoazo compound, then diazotizing this compound and coupling the product onto 1,3-dihydroxybenzene (resorcinol),

c) diazotizing a compound of the formula

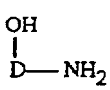

(6)

and coupling the product onto the product obtained according to b) and

d) metallizing the trisazo product obtained according to c) with a metal-releasing agent, D, $D_1$ and M in each case being as defined in claim 1 and $R_4$ being $C_2$-$C_4$alkanoyl or benzoyl.

**13.** The use of a metal complex of a compound of the formula (1) as dye for the dyeing of fibre materials made of natural or regenerated cellulose, natural or synthetic polyamides, polyurethanes or base-modified polyolefins, for the colouring of anodized aluminium or for the dyeing of furs and leather.

**14.** The use according to claim 13, wherein furs or leather are dyed.

**15.** A compound of the formula (1) according to claim 1.

## Revendications

**1.** Complexes métalliques des composés de formule :

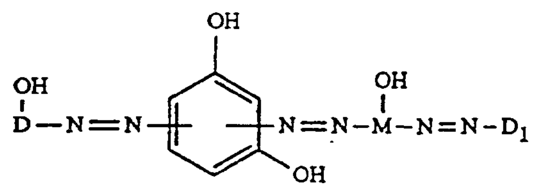

(1),

dans laquelle:

D désigne un reste 1-naphtylamine, 2-naphtylamine ou aminobenzène, non substitué ou substitué par alkyle en $C_1$-$C_4$, alcoxy en $C_1$-$C_4$, halogène, trifluorométhyle, alkylsulfonyle en $C_1$-$C_4$, sulfamoyle, N-monoalkylsulfamoyle en $C_1$-$C_4$, N,N-dialkylsulfamoyle en $C_1$-$C_4$, carbamoyle, N-monoalkyl en $C_1$-$C_4$ carbamoyle, N,N-dialkyl en C1-$C_4$ carbamoyle, sulfo, nitro, cyano, carboxy, phénoxy, alcanoylamino en $C_1$-$C_4$ et/ou alcoxy en $C_1$-$C_4$ carbonyle, présentant un groupe hydroxy en position ortho par rapport au groupe amino;

$D_1$ désigne un reste 1-naphtylamine, 2-naphtylamine ou aminobenzène, non substitué ou substitué par alkyle en $C_1$-$C_4$, alcoxy en $C_1$-$C_4$, halogène, trifluorométhyle, alkylsulfonyle en $C_1$-$C_4$, sulfamoyle, N-monoalkylsulfamoyle en $C_1$-$C_4$, N,N-di-alkylsulfamoyle en $C_1$-$C_4$, carbamoyle, N-monoalkyl en $C_1$-$C_4$ carbamoyle, N,N-dialkyl en $C_1$-$C_4$ carbamoyle, sulfo, nitro, cyano, carboxy, phénoxy, alcanoylamino en $C_1$-$C_4$ et/ou alcoxy en $C_1$-$C_4$ carbonyle;

et M désigne un reste phénylène portant éventuellement d'autres substituants.

2. Complexes métalliques selon la revendication 1, caractérisés par le fait que D-OH désigne le reste d'un ortho-aminophénol non substitué ou bien substitué par chlore, nitro, sulfo, méthyle, méthoxy, méthylsulfonyle, carbamoyle et/ou sulfamoyle.

3. Complexes métalliques selon la revendication 1, caractérisés par le fait que D-OH désigne le reste d'un ortho-aminophénol non substitué ou bien substitué par sulfo, nitro et/ou chlore.

4. Complexes métalliques selon l'une des revendications 1 à 3, caractérisés par le fait que $D_1$ désigne le reste d'un aminobenzène ou d'une 1-naphtylamine ou d'une 2-naphtylamine non substituée ou substituée par sulfo, nitro, chlore, méthyle, méthoxy, méthylsulfonyle, carbamoyle et/ou sulfamoyle.

5. Complexes métalliques selon l'une des revendications 1 à 4, caractérisés par le fait que $D_1$ désigne un reste d'acide aniline-2-sulfonique, d'un acide aniline-3-sulfonique ou d'un acide aniline-4-sulfonique.

6. Complexes métalliques selon l'une des revendications 1 à 5, caractérisés par le fait que le reste -M(OH)- correspond à la formule :

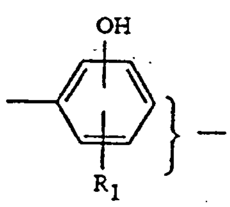

(2),

dans laquelle $R_1$ désigne hydrogène, alkyle en $C_1$-$C_4$, alcoxy en $C_1$-$C_4$, halogène, nitro ou sulfo.

7. Complexes métalliques selon l'une des revendications 1 à 6, caractérisés par le fait que le reste -M(OH)- correspond à la formule:

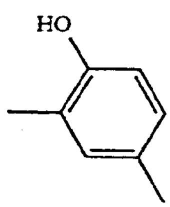

(2a),

dans laquelle les groupes hydroxy se trouvent en position ortho par rapport aux groupes azoïques qui relient M à la résorcine.

**8.** Complexes de cobalt, de nickel, de chrome, de cuivre ou de fer selon la revendication 1.

**9.** Complexes de fer selon la revendication 1.

**10.** Complexes de cobalt, de nickel, de chrome, de cuivre et de fer des composés de formule:

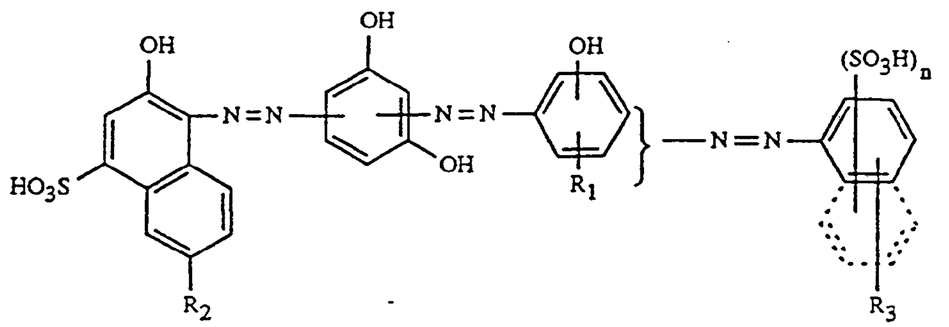

(1a),

dans laquelle $R_1$ a la signification indiquée dans la revendication 6, $R_2$ désigne hydrogène, nitro, sulfo ou chlore; $R_3$ désigne hydrogène, nitro, chlore, méthyle, méthoxy, méthylsulfonyle, carbamoyle ou sulfamoyle et n désigne le nombre 0 ou 1.

**11.** Complexes de fer, de cobalt, de chrome et de cuivre des composés de formule :

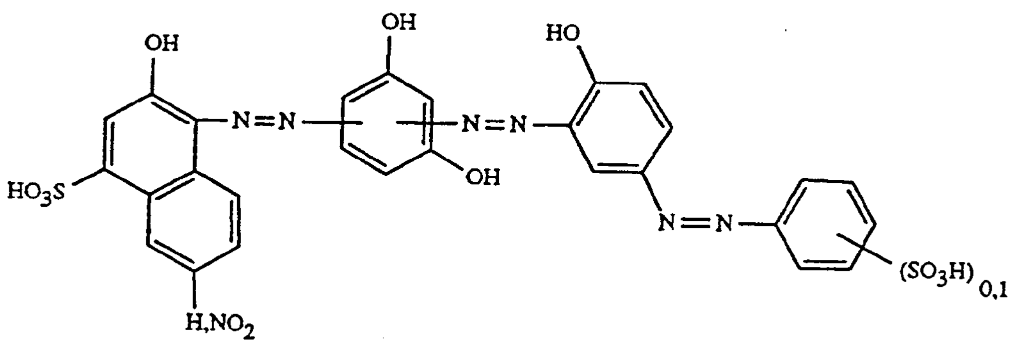

(1b)

**12.** Procédé de préparation de complexes métalliques des composés de formule (1) selon la revendication 1, caractérisé par le fait que:

a) on diazote un composé de formule :

$$D_1\text{-}NH_2 \qquad (3)$$

et on le copule sur un composé de formule :

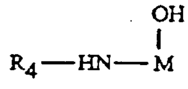

(4)

b) on transforme le composé monoazoïque résultant de formule :

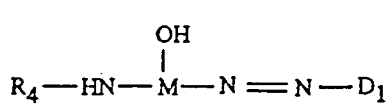

(5)

par saponification dans le composé aminoazoïque correspondant, on diazote ce dernier et on le copule avec un 1,3-dihydroxybenzène (résorcine);

c) on diazote un composé de formule :

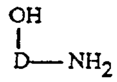

(6)

et on le copule avec un produit résultant de l'étape b), et

d) on métallise le produit disazoïque obtenu dans l'étape c) avec un agent métallisant,

dans les formules ci-dessus, D, $D_1$ et M ont chaque fois la signification indiquée dans la revendication 1 et $R_4$ désigne alcanoyle en $C_2$-$C_4$ ou benzoyle.

**13.** Utilisation des complexes métalliques des composés de formule (1) comme colorants pour la teinture de fibres en cellulose naturelle ou régénérée, de polyamides naturels ou synthétiques, de polyuréthanes ou de polyoléfines modifiées basiquement, d'aluminium anodisé ou bien du cuir ou de la fourrure.

**14.** Utilisation selon la revendication 13, caractérisée par le fait qu'on teint du cuir ou de la fourrure.

**15.** Composés de formule (1) selon la revendication 1.